(19) **Europäisches Patentamt / European Patent Office / Office européen des brevets**

(11) **EP 2 821 628 B1**

(12) **EUROPÄISCHE PATENTSCHRIFT**

(45) Veröffentlichungstag und Bekanntmachung des Hinweises auf die Patenterteilung:
**02.11.2016 Patentblatt 2016/44**

(51) Int Cl.:
*F01N 5/02* (2006.01)  *F01N 3/20* (2006.01)
*F02M 25/12* (2006.01)  *F02M 26/24* (2016.01)
*F02M 26/35* (2016.01)  *F02M 26/44* (2016.01)

(21) Anmeldenummer: **14172760.2**

(22) Anmeldetag: **17.06.2014**

(54) **Verfahren und Vorrichtung zur Behandlung von Abgaskondensaten eines Verbrennungsmotors**

Method and device for treating exhaust gas condensates from a combustion engine

Procédé et dispositif de traitement de condensats de gaz d'échappement d'un moteur à combustion interne

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.06.2013 DE 102013211509**

(43) Veröffentlichungstag der Anmeldung:
**07.01.2015 Patentblatt 2015/02**

(73) Patentinhaber:
• **MAHLE Behr GmbH & Co. KG**
  **70469 Stuttgart (DE)**
• **MAHLE International GmbH**
  **70376 Stuttgart (DE)**

(72) Erfinder:
• **Englert, Peter**
  **74177 Bad Friedrichshall (DE)**
• **Gorges, Roger**
  **Harborne Birmingham,**
  **West Midlands B17 9AF (GB)**

(74) Vertreter: **Grauel, Andreas**
  **Grauel IP**
  **Patentanwaltskanzlei**
  **Wartbergstrasse 14**
  **70191 Stuttgart (DE)**

(56) Entgegenhaltungen:
**WO-A2-2010/075205    FR-A1- 2 941 499**

**Beschreibung**

Technisches Gebiet

Die Erfindung betrifft ein Verfahren zur Behandlung von Abgaskondensaten eines Verbrennungsmotors nach dem Oberbegriff von Anspruch 1 und eine Vorrichtung zur Behandlung von Abgaskondensaten eines Verbrennungsmotors nach dem Oberbegriff von Anspruch 7.

Stand der Technik

Es sind Abgasrückführsysteme in Kraftfahrzeugen bekannt, welche mit dem Verbrennungsmotor des Kraftfahrzeuges kombiniert sind. Solche Abgasrückführsysteme stellen eine essentielle Strategie zur Reduzierung von Schadstoffemissionen, insbesondere von Stickoxiden ($NO_x$) dar. Das dem Verbrennungsmotor rückgeführte Abgas wird vor der Wiedereinspeisung in den Verbrennungsmotor unter den Taupunkt von Wasser auf bis zu 40°C durch einen im Abgasrückführungssystem enthaltenen Abgaskühler gekühlt. Bei diesem Kühlprozess werden große Mengen an wässrigem Kondensat als Folge der innermotorischen Verbrennung von Kraftstoffen bereitgestellt. In den anfallenden Abgaskondensaten lösen sich Abgasschadstoffe, wie z.B. Stickoxide, Schwefeloxide und organische Substanzen und es bilden sich folglich anorganische und organische Säuren. Diese sauren Kondensate stellen ein großes Problem dar, da sie sowohl die Abgaskuhler-Werkstoffe als auch nachgelagerte Komponenten des Verbrennungsmotors korrosiv angreifen.

Aus der DE 10 2008 049 625 A1 sind ein Verfahren und eine Vorrichtung zur Neutralisation von saurem Kondensat in einem Kraftfahrzeug bekannt, wobei die Abgasrückführung einen Abgasrückführungskühler zur Abkühlung des heißen Abgasstromes aufweist, Vor dem Abgasrückführungskühler ist ein Dosiersystem zur Eindosierung einer basischen Substanz in den heißen Abgasstrom angeordnet. Durch diese basische Substanz wird das saure Kondensat im Verbrennungsmotor neutralisiert.

Die FR 2 941 499 A1 offenbart eine Elektrolysevorrichtung, mittels welcher aus Wasser aus dem Abgas eines Verbrennungsmotors Wasserstoff erzeugt wird.

Darstellung der Erfindung, Aufgabe, Lösung, Vorteile

Es ist die Aufgabe der Erfindung, ein Verfahren und eine Vorrichtung zu schaffen, die eine energetisch günstige Neutralisierung von Abgaskondensaten erlaubt.

Dies wird erreicht mit den Merkmalen von Anspruch 1, wonach Stickoxide der abgekühlten Abgaskondensate durch eine Elektrolyse in Ammoniak umgewandelt werden. Die Umwandlung der Stickoxide in Ammoniak führt dazu, dass die Stickoxide in dem Abgaskondensat, welches dem Verbrennungsmotor wieder zugeführt wird, reduziert werden. Bei der Elektrolyse werden Hydroxylionen aus dem Abgaskondensat gewonnen, welche zur Neutralisation der Stickoxide beitragen. Mittels einer solchen elektrochemischen Reduktion kann die Abgasreinigung vorteilhaft nach der Abkühlung der Abgaskondensate verlaufen.

Vorteilhafterweise erfolgt die Elektrolyse im Bereich eines Taupunktes von Wasser, vorzugsweise oberhalb des Taupunktes. Dadurch wird die Erzeugung von sauren Abgaskomponenten bei der Elektrolyse unterbunden, wodurch eine Korrosion der Abgaskühler-Werkstoffe als auch nachgelagerter Komponenten des Verbrennungsmotors vermieden wird.

In einer Variante wird eine Energie für die Elektrolyse aus einer Abwärme des Verbrennungsmotors gewonnen. Dabei wird die Abwärme nicht nur zur elektrolytischen Erzeugung von Ammoniak aus Stickoxiden sondern auch zur elektrolytischen Erzeugung von Wasserstoff zur $CO_2$-Reduzierung und zur elektrolytischen Erzeugung der Hydroxylionen im Kondensat genutzt.

In einer Ausführungsform wird die Energie aus der Abwärme des Verbrennungsmotors mittels eines thermoelektrischen Prozesses gewonnen, Eine solche Energieform ist besonders für die Elektrolyseverfahren geeignet.

Ferner wird das während der Elektrolyse erzeugte Ammoniak bei einem SCR-Abgasreinigungsverfahren im Verbrennungsmotor verwendet. Dabei wird eine Komproportionierungsreaktion ausgelöst, unter welcher im Weiteren ein Spezialfall einer Redoxreaktion verstanden werden soll, bei der durch gleichzeitige Reduktion und Oxidation aus einer höheren und einer niedrigeren Oxidationsstufe zweier Atome des gleichen Elementes eine dazwischenliegende Oxidationsstufe gebildet wird. Eine solche Komproportionierungsreaktion erfolgt vorteilhafterweise, wenn das reduzierte Kondensatgemisch in Form von ammonium- und wasserstoffhaltigem Wasserdampf dem Verbrennungsprozess des Verbrennungsmotors wieder zugeführt wird. Dabei kommt es zu einer Verminderung der Stickoxidbildung aufgrund der Komproportionierungsreaktion der Stickoxide mit Ammoniak zu Stickstoff während des Verbrennungsprozesses.

In einer weiteren Ausführungsform wird der während der Elektrolyse erzeugte Wasserstoff vor einer Zuführung zu dem Verbrennungsmotor einer Ladeluft zugeführt. Eine solche Wasserstoffanreicherung zieht eine Reduzierung der

$CO_2$-Emission nach sich.

Eine Weiterbildung der Erfindung betrifft eine Vorrichtung zur Behandlung von Abgaskondensaten eines Verbrennungsmotors, bei welchem ein aus dem Verbrennungsmotor austretendes, Stickoxide enthaltendes Abgas direkt oder über einen Turbolader mindestens einem Abgaskühler zugeführt ist, welcher zur Rückführung des Abgases mit dem Verbrennungsmotor verbunden ist. Bei einer Vorrichtung, bei welcher die Abgaskondensate reduziert werden, ist zwischen dem Abgaskühler und dem Verbrennungsmotor eine Elektrolyseeinheit zur Umwandlung von Stickoxiden aus den Abgaskondensaten in Ammoniak angeordnet. Mittels einer solchen Elektrolyseeinheit erfolgt eine Optimierung des in dem abgekühlten Abgas wieder dem Verbrennungsmotor zugeführten Abgaskondensats. Dies trifft insbesondere auf die elektrolytische Ammoniakerzeugung aus den als Abgaskondensat auftretenden Stickoxiden zu. Gleichzeitig wird während der Elektrolyse aber auch Wasserstoff erzeugt, mittels welchem auch eine $CO_2$-Reduzierung im Abgas realisiert werden kann.

Vorteilhafterweise ist die Elektrolyseeinheit zur Versorgung mit elektrischer Energie mit einem thermoelektrischen Generator kombiniert. Dieser thermoelektrische Generator nutzt die Abwärme des Verbrennungsmotors, um Energie für die Elektrolyse bereit zu stellen. Somit dient die Abwärme als Energiequelle für den elektrochemischen Reduktionsprozess.

In einer Ausgestaltung umfasst der Verbrennungsmotor einen, ein SCR-Abgasreinigungsverfahren ausführenden Katalysator, dem das während der Elektrolyse erzeugte Ammoniak zugeführt wird. Dies hat den Vorteil, dass die zusätzliche Bereitstellung von Harnstofflösungen in Behältern zur Erzeugung von Ammoniak, wie es bei bekannten SCR-Verfahren notwendig ist, entfällt, wodurch der Bauraum des Verbrennungsmotors weiter reduziert werden kann.

In einer Ausgestaltung ist ein Eingang eines Frischluft bereitstellenden Ladeluftkühlers vor einem Eingang des Verbrennungsmotors mit einem Ausgang der Elektrolyseeinheit verbunden. Dies hat den Vorteil, dass der in der Elektrolyseeinheit bereitgestellte Wasserstoff mit dem Sauerstoff der Frischluft reagieren kann, wodurch eine Reduzierung der $CO_2$-Emission durch Anreicherung des Gemisches mit Wasserstoff in der Ladeluft erfolgt.

Weitere vorteilhafte Ausgestaltungen sind durch die nachfolgende Figurenbeschreibung und durch die Unteransprüche beschrieben.

Kurze Beschreibung der Zeichnungen

Nachstehend wird die Erfindung auf der Grundlage zumindest eines Ausführungsbeispiels anhand der Zeichnungen näher erläutert. Es zeigt:

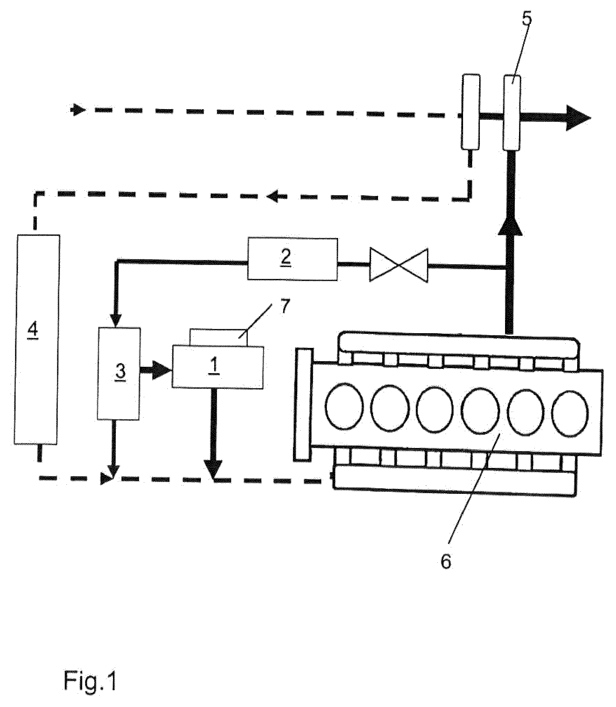

Fig. 1   ein Ausführungsbeispiel für eine erfindungsgemäße Vorrichtung zur Behandlung von Abgaskondensaten eines Verbrennungsmotors.

Bevorzugte Ausführung der Erfindung

Die Figur 1 zeigt ein Ausführungsbeispiel einer erfindungsgemäßen Vorrichtung zur Behandlung von Abgaskondensaten eines Verbrennungsmotors 6. Bei diesem Ausführungsbeispiel handelt es sich um eine Hochdruckabgas-Rückführung, bei welcher ein Teil des, die Abgaskondensate enthaltenden Abgases direkt aus dem Verbrennungsmotor 6 auf die Abgasrückführung geführt wird. Der andere Teil des heißen Abgases wird aus dem Verbrennungsmotor 6 auf einen Turbolader 5 geleitet.

Die Abgasrückführung besteht aus einem ersten Abgaskühler 2, welchem ein zweiter Abgaskühler 3 nachgelagert ist. Das über den ersten und den zweiten Abgaskühler 2, 3 geführte Abgas wird somit gekühlt und danach der aus dem luftgekühlten Ladeluftkühler 4 austretenden Frischluft beigemischt.

Der zweite Abgaskühler 3 weist einen Abzweig auf, mittels welchem der Hauptteil des gekühlten Abgases einer elektrochemischen Zelle 1 zugeführt wird. Die elektrochemische Zelle 1 ist mit einem thermoelektrischen Generator 7 kombiniert. Das über die elektrochemische Zelle 1 gereinigte Abgas wird mit dem, von dem Ladeluftkühler 4 abgegebenen Frischluftstrom gemischt, wobei dieses Gemisch wiederum dem Verbrennungsmotor 6 zugeführt wird.

In der elektrochemischen Zelle 1, die als Durchfluss-Elektrolysezelle ausgebildet ist, wird bei einer Elektrolyse eine elektrochemische Denitrifizierung ausgeführt. Dabei werden die in den Abgaskondensaten erhaltenen Stickoxide, wie Nitrate und Nitrite, zu elementarem Stickstoff umgewandelt. Bei dieser Elektrolyse bilden sich als Reaktionsprodukte Ammoniak und Wasserstoff. Das Ammoniak hat dabei den Vorteil, dass es die sauren Abgaskondensate neutralisiert, so dass korrosive Anteile aus den Abgaskondensaten entfallen. Wird nun das Kondensatgemisch in Form von ammoniak- und wasserstoffhaltigem Wasserdampf dem Verbrennungsmotor 6 zugeführt, kommt es zu einer Verminderung der Stickoxidbildung aufgrund einer Komproportionierungsreaktion der Stickoxide mit Ammoniak zu Stickstoff während des Verbrennungsprozesses. Diese Reaktion kann in einem Katalysator bei erniedrigter Aktivierungsenergie, d.h. reduzierter Abgastemperatur, erfolgen oder aber auch direkt im Verbrennungsprozess bei der dort höheren Temperatur.

In dem Katalysator wird das SCR-Abgasreinigungsverfahren verwirklicht. SCR (Selective Catalytic Reduction) bezeichnet eine selektive katalytische Reaktion von Stickoxiden in Abgasen von Motoren. Diese chemische Reaktion ist selektiv, weil nicht alle Abgaskomponenten reduziert werden, sondern nur die Stickoxide NO, $NO_2$. Aufgrund des durch die Elektrolyse bereitgestellten Ammoniaks entfällt eine gesonderte Bereitstellung einer Harnstofflösung zur Erzeugung von Ammoniak. Somit ist das SCR-Verfahren ohne zusätzliche Hilfsstoffe im Verbrennungsmotor 6 realisierbar.

In der Nebenreaktion der Elektrolyse in der elektrochemischen Zelle 1 wird elektrolytisch Wasserstoff erzeugt, was wiederum zu einer Reduzierung des $CO_2$-Ausstoßes beiträgt, da ein Teil der Verbrennungsenergie aus der Wasserstoffverbrennung stammt.

Wie bereits angeführt, ist die elektrochemische Zelle 1 mit einem thermoelektrischen Generator 7 kombiniert. Mittels des thermoelektrischen Generators 7 werden bei geringen Spannungen (2 bis 8 Volt) große Ströme erzeugt. Bei dem thermoelektrischen Prozess wird der an sich bekannte Seebeck-Effekt genutzt, bei welchem das Auftreten einer Spannung zwischen zwei Stellen unterschiedlicher Temperatur eines Leiters ausgenutzt wird. Die Potentialdifferenz ist dabei annähernd proportional zur Temperaturdifferenz und abhängig vom Leitermaterial. Der Wärmefluss durch den Leiter mit unterschiedlichen Temperaturen erzeugt dabei eine elektrische Spannung. Der Einsatz anderer durch Abwärme betriebener Generatoren zur Erzeugung des Elektrolysestromes ist alternativ möglich.

Werden z.B. 200 kW Abwärme eines Verbrennungsmotors 6 mit 5 % Wirkungsgrad in elektrische Energie umgewandelt, stehen 10 kW elektrische Leistung für die Elektrolyse in der elektrochemischen Zelle 1 zur Verfügung. Für eine Elektrolyse mit 5 Volt Zellspannung ergibt sich ein Strom von 2000 Ampere. Bei einem Wirkungsgrad der elektrochemischen Zelle 1 von 70 % stehen noch 1400 Ampere Strom für die Elektrolyse zur Verfügung. Wird eine Emission von 300 mg $NO_x$ pro gefahrenen Kilometer, wie bei einem Standard-Diesel-Pkw von der Euro-Norm 4 gefordert, und eine vollständige Abgasrückführung betrachtet, ergeben sich bei einer Geschwindigkeit von 100 km/h 30 g Stickoxide, die elektrolytisch in einer Stunde umgesetzt werden müssen.

Mit der Faraday'schen Gleichung berechnet

$$m = \frac{M * Q}{z * F} \qquad (1)$$

wobei

Q = Ladung (Amperesekunde)
M = molare Masse des Stickoxides NO 30,0 g/mol
m = Masse an Stickoxid 30 g/h
z = Elektronenzahl 5
F = Faraday-Konstante 95485 As/mol;

ergibt sich eine Ladung Q = 485425 As/3600 s = 134 A/h.
Bei einer Zellspannung von 5 Volt werden zur Reduktion einer solchen Menge Stickoxide 670 Wattstunden = 0,67 kWh benötigt.

Es ist somit mindestens 0,67 kW/h Leistung erforderlich. Zuzüglich Wirkungsgradverluste sind bei dieser Umsetzung mit ca. 1 kWh Leistung zur Erzeugung des Elektrolysestromes zu realisieren. Bisher bekannte thermoelektrische Generatoren mit Abmaßen von 50 x 50 mm liefern z.B. eine Leistung von 20 Watt. Für eine Leistung von 1000 W sind daher mit handelsüblichen thermoelektrischen Generatoren Wärmetauscherflächen unter 1 m$^2$ erforderlich.

Bei einer Umsetzung von 25 kW Abwärme in Elektrolysestrom bei dem vorgeschlagenen Verfahren, was einem ca. 10%igen Wirkungsgrad aus 250 kW Abwärme des Verbrennungsmotors entspricht, können nach der gemäß Gleichung (1) ausgeführte Berechnung 3,9 kg Stickoxide umgesetzt werden.

Als Beispiel soll die Reduktion von Salpetersäure angeführt werden. Der Strom I = P/U= 2500 W/ 3V entspricht 8333 Ampere, wobei P die Leistung und U die Spannung darstellen. Daraus ergibt sich gemäß Gleichung 1 eine Masse m des Stickoxides.

$$m = 63 \text{ g/mol} * 8333 \text{ Ampere (C/s)} * 3600 \text{ s} / 5 * 9485 \text{ C/mol} = 3917 \text{ g}.$$

Der Wirkungsgrad des Seebeck-Effektes hängt in erster Linie von der Temperaturdifferenz der beiden Elektroden des verwendeten Leiters ab. Die thermische Trennung kann durch aktive Ableitung der thermischen Ströme deutlich verbessert werden. Dies kann entweder durch Flüssigkeiten erfolgen oder durch Feststoffe, wie Bornitrit.

Die erläuterte Lösung hat den Vorteil, dass die energetisch günstige Komproportionierungsreaktion der Stickoxide mit Ammoniak zu Stickstoff direkt im Verbrennungsprozess erfolgt. Gleichzeitig wird die Abwärme des Verbrennungsmotors zur Reinigung der Abgase genutzt, wobei bei der Nutzung der Abwärme mechanische Umwandlungsverluste unterbleiben.

**Patentansprüche**

1. Verfahren zur Behandlung von Abgaskondensaten eines Verbrennungsmotors, bei welchem Stickoxide umfassendes Abgas einem Abgas-Rückführungssystem zugeführt werden und in diesem abgekühlt werden, so dass Stickoxide umfassende Abgaskondensate bereitgestellt werden, **dadurch gekennzeichnet, dass** Stickoxide der abgekühlten Abgaskondensate durch eine Elektrolyse in Ammoniak umgewandelt werden.

2. Verfahren nach Anspruch 1, **dadurch gekennzeichnet, dass** die Elektrolyse im Bereich eines Taupunktes von Wasser, vorzugsweise oberhalb des Taupunktes, erfolgt.

3. Verfahren nach Anspruch 1 oder 2, **dadurch gekennzeichnet, dass** eine Energie für die Elektrolyse aus einer Abwärme des Verbrennungsmotors (6) gewonnen wird.

4. Verfahren nach Anspruch 3, **dadurch gekennzeichnet, dass** die Energie aus der Abwärme des Verbrennungsmotors (6) mittels eines thermoelektrischen Prozesses gewonnen wird.

5. Verfahren nach einem der vorhergehenden Ansprüche, **dadurch gekennzeichnet, dass** das während der Elektrolyse erzeugte Ammoniak bei einem SCR-Abgasreinigungsverfahren im Verbrennungsmotor verwendet wird.

6. Verfahren nach einem der vorhergehenden Ansprüche, **dadurch gekennzeichnet, dass** der während der Elektrolyse erzeugte Wasserstoff vor einer Zuführung zu dem Verbrennungsmotor einer Ladeluft zugeführt wird.

7. Vorrichtung zur Behandlung von Abgaskondensaten eines Verbrennungsmotors, bei welchem ein aus dem Verbrennungsmotor (6) austretendes, Stickoxide enthaltendes Abgas direkt oder über einen Turbolader (5) mindestens einem Abgaskühler (2, 3) zuführbar ist, welcher zur Rückführung des Abgases mit dem Verbrennungsmotor (6) verbunden ist, so dass Stickoxide enthaltende Abgaskondensate bereitstellbar sind,
**dadurch gekennzeichnet, dass** zwischen dem Abgaskühler (2) und dem Verbrennungsmotor (6) eine Elektrolyseeinheit (1) zur Umwandlung von Stickoxiden aus den Abgaskondensaten in Ammoniak angeordnet ist

8. Vorrichtung nach Anspruch 7, **dadurch gekennzeichnet, dass** die Elektrolyseeinheit (1) zur Versorgung mit elektrischer Energie mit einem thermoelektrischen Generator (7) kombiniert ist.

9. Vorrichtung nach Anspruch 7 oder 8, **dadurch gekennzeichnet, dass** der Verbrennungsmotor (6) einen Katalysator zum Ausführen eines SCR-Abgasreinigungsverfahren umfasst, dem das während der Elektrolyse erzeugte Ammoniak zuführbar ist.

10. Vorrichtung nach Anspruch 7, 8 oder 9, **dadurch gekennzeichnet, dass** ein Ausgang eines Frischluft bereitstellenden Ladeluftkühlers (4) vor einem Eingang des Verbrennungsmotors (6) mit einem Ausgang der Elektrolyseeinheit (1) verbunden ist.

**Claims**

1. A method for treating exhaust gas condensates of an internal combustion engine, in which exhaust gas containing nitrogen oxides is delivered to an exhaust gas recirculation system and cooled therein so that exhaust gas condensates containing nitrogen oxides are provided, **characterised in that** nitrogen oxides of the cooled exhaust gas condensates are converted to ammonia through electrolysis.

2. The method according to claim 1, **characterised in that** the electrolysis takes place in the region of a dew point of water, preferably above the dew point.

3. The method according to claim 1 or 2, **characterised in that** energy for the electrolysis is obtained from waste heat of the internal combustion engine (6).

**4.** The method according to claim 3, **characterised in that** the energy is obtained from the waste heat of the internal combustion engine (6) by means of a thermoelectric process.

**5.** The method according to one of the preceding claims, **characterised in that** the ammonia produced during the electrolysis is used in an SCR exhaust gas purification method in the internal combustion engine.

**6.** The method according to one of the preceding claims, **characterised in that** the hydrogen produced during the electrolysis is added to charge air prior to delivery to the internal combustion engine.

**7.** A device for treating exhaust gas condensates of an internal combustion engine, in which an exhaust gas containing nitrogen oxides and emerging from the internal combustion engine (6) can be delivered either directly or through a turbocharger (5) to at least one exhaust gas cooler (2, 3) that is connected to the internal combustion engine (6) for recirculation of the exhaust gas, so that exhaust gas condensates containing nitrogen oxides can be provided, **characterised in that** an electrolysis unit (1) for converting nitrogen oxides from the exhaust gas condensates into ammonia is arranged between the exhaust gas cooler (2) and the internal combustion engine (6).

**8.** The device according to claim 7, **characterised in that** the electrolysis unit (1) is combined with a thermoelectric generator (7) in order to provide electric power.

**9.** The device according to claim 7 or 8, **characterised in that** the internal combustion engine (6) includes a catalytic converter for executing an SCR exhaust gas purification method to which the ammonia produced during the electrolysis can be delivered.

**10.** The device according to claim 7, 8 or 9, **characterised in that** an outlet of an intercooler (4) providing fresh air is connected to an outlet of the electrolysis unit (1) upstream of an intake of the internal combustion engine (6).

## Revendications

**1.** Procédé de traitement de condensats de gaz d'échappement d'un moteur à combustion interne dans lequel des gaz d'échappement contenant des oxydes d'azote sont fournis à un système de recyclage des gaz d'échappement et sont refroidis dans ce système de recyclage, de sorte que des condensats de gaz d'échappement contenant des oxydes d'azote sont prêts à être fournis, **caractérisé en ce que** des oxydes d'azote des condensats de gaz d'échappement refroidis sont transformés en ammoniac par une électrolyse.

**2.** Procédé selon la revendication 1, **caractérisé en ce que** l'électrolyse se produit dans la plage d'un point de condensation de l'eau, de préférence au-dessus du point de condensation.

**3.** Procédé selon la revendication 1 ou 2, **caractérisé en ce qu'**une énergie pour l'électrolyse est obtenue à partir d'une dissipation de chaleur du moteur à combustion interne (6).

**4.** Procédé selon la revendication 3, **caractérisé en ce que** l'énergie provenant de la dissipation de chaleur du moteur à combustion interne (6) est obtenue au moyen d'un processus thermoélectrique.

**5.** Procédé selon l'une quelconque des revendications précédentes, **caractérisé en ce que** l'ammoniac produit au cours de l'électrolyse est utilisé au cours d'un procédé de purification des gaz d'échappement par réduction catalytique sélective - SCR - se produisant dans le moteur à combustion interne.

**6.** Procédé selon l'une quelconque des revendications précédentes, **caractérisé en ce que** l'hydrogène produit au cours de l'électrolyse est fourni à un air de suralimentation, avant d'être fourni au moteur à combustion interne.

**7.** Dispositif de traitement de condensats de gaz d'échappement d'un moteur à combustion interne dans lequel des gaz d'échappement sortant du moteur à combustion interne (6) et contenant des oxydes d'azote peuvent être fournis au moins à un refroidisseur de gaz d'échappement (2, 3), directement ou par l'intermédiaire d'un turbocompresseur (5), refroidisseur de gaz d'échappement qui, servant au recyclage des gaz d'échappement, est relié au moteur à combustion interne (6), de sorte que des condensats de gaz d'échappement contenant des oxydes d'azote sont prêts à être fournis, **caractérisé en ce qu'**une unité d'électrolyse (1) servant à la transformation, en ammoniac, d'oxydes d'azote provenant des condensats de gaz d'échappement, est disposée entre le refroidisseur de gaz d'échappement (2) et le moteur à combustion interne (6).

8. Dispositif selon la revendication 7, **caractérisé en ce que** l'unité d'électrolyse (1) servant à l'alimentation en énergie électrique est combinée à un générateur (7) thermoélectrique.

9. Dispositif selon la revendication 7 ou 8, **caractérisé en ce que** le moteur à combustion interne (6) comprend un catalyseur servant à l'exécution d'un procédé de purification des gaz d'échappement par réduction catalytique sélective (SCR), procédé auquel peut être fourni l'ammoniac produit au cours de l'électrolyse.

10. Dispositif selon la revendication 7, 8 ou 9, **caractérisé en ce qu'**une sortie d'un refroidisseur d'air de suralimentation (4) fournissant de l'air frais est reliée, en amont d'une entrée du moteur à combustion interne (6), à une sortie de l'unité d'électrolyse (1).

Fig.1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008049625 A1
- FR 2941499 A1